# EUROPÄISCHE PATENTSCHRIFT

(11) **EP 0 914 069 B1**
(45) Veröffentlichungstag und Bekanntmachung des Hinweises auf die Patenterteilung: **25.09.2002**
(21) Anmeldenummer: 98921433.3
(22) Anmeldetag: 06.04.1998
(51) Int. Cl.: A61C 1/00, B05C 17/005, B65D 81/32

(54) **ANORDNUNG ZUM AUSGEBEN EINER GEMISCHTEN DENTALTECHNISCHEN MEHRKOMPONENTENMASSE**
DEVICE FOR DISPENSING A MIXED DENTAL MULTICONSTITUENT MASS
AGENCEMENT POUR EXPRIMER UNE PATE MULTICONSTITUANTS TECHNIQUE DENTAIRE MELANGEE

(30) Priorität: 08.04.1997 DE 29706235 U
(43) Veröffentlichungstag der Anmeldung: 12.05.1999
(73) Patentinhaber: Ernst Mühlbauer GmbH & Co.KG, 25870 Norderfriedrichskoog (DE)
(72) Erfinder: HÖRTH, Hans, D-21147 Hamburg (DE)
(74) Vertreter: Glawe, Delfs, Moll & Partner
(86) Internationale Anmeldenummer: EP9801993
(87) Internationale Veröffentlichungsnummer: WO98044860

(56) Entgegenhaltungen:
- EP-A- 0 319 666
- EP-A- 0 541 972
- DE-U- 9 412 703
- FR-A- 2 558 209

## Beschreibung

Für zahnärztliche Abdruckmassen verwendet man Zweikomponentenmassen, die in Schlauchbeuteln enthalten sind. Diese werden innerhalb eines Ausbringgerätes in einem Zylinder gehalten. Die Masse wird mittels Kolbenwirkung ausgepreßt und durch einen Mischer ausgebracht (EP-A 492 413). Bei einem bekannten Gerät dieser Art (EP-A 541 972) ist jeder Schlauchbeutel an seinem vorderen Ende mit einem Mundstück versehen, das mit einer komplementären Öffnung an der Stirnseite des Zylinders dichtend zusammenwirkt. Die Stirnseite des Zylinders bildet ein Kopfstück, in welchem Kanäle vorhanden sind, die die Komponenten zu Anschlußstutzen führen, an die der Mischer anschließbar ist. Die Zylinder und das Kopfstück sind feste Bestandteile des Ausbringgerätes. Will man Komponentenbeutel auswechseln, so entfernt man die Beutel aus den sie aufnehmenden Zylindern und setzt andere Beutel ein, wobei darauf geachtet werden muß, daß ihre Mundstücke dichten Anschluß an die im Kopfstück vorgesehenen Öffnungen finden. Dabei geschieht es leicht, daß der dichte Anschluß verfehlt oder noch nicht unmittelbar beim Einsetzen erreicht wird und ein Teil der Komponenten in das Gerät dringt. Auch kann es geschehen, daß Luft in die Masse eingeschlossen wird und zu Fehlern bei der Verwendung führt oder daß Komponenten verwechselt werden.

Diese Nachteile werden durch die Erfindung dadurch vermieden, daß das Kopfstück einschließlich der Anschlüsse für den Mischer fest mit den Schlauchbeuteln verbunden und mit diesen auswechselbar ist.

Das Kopfstück ist zweckmäßigerweise mit der Stirnseite des zugehörigen Beutels bzw. der Beutel dicht verklebt. Ferner ist es zweckmäßig, wenn ein einheitliches Kopfstück, das mehrere getrennte Kanäle enthält, mit mehreren, zusammengehörigen Schlauchbeuteln verbunden ist. Jedoch umfaßt die Erfindung auch solche Ausführungen, bei denen für jeden Schlauchbeutel ein gesondertes Kopfstück vorgesehen ist.

Das Kopfstück kann insgesamt einstückig ausgebildet sein. In diesem Fall wird der Beutel, nachdem sein Zopf geöffnet wurde, stirnseitig mit dem Kopfstück verbunden, beispielsweise verklebt. Die Anordnung kann auch so getroffen werden, daß der Beutel mit einem Verschluß versehen ist, der sich unter Überdruck öffnet. In diesem Fall ist es möglich, den geschlossenen Schlauch mit dem Kopfstück zu verbinden und den Vorgang des Öffnens dem Druck zu überlassen, der sich bei Benutzung des Gerätes aufgrund der Kolbenbewegung ergibt. Bevorzugt wird eine Ausführung, bei welcher das Kopfstück aus wenigstens zwei Teilen besteht, von denen einer mit wenigstens einem Schlauchbeutel derart verbindbar ist, daß dessen Verschlußende bzw. Zopf von der dem Beutel abgewandten Seite dieses Teils her zugänglich ist und geöffnet werden kann, solange dieser Teil des Kopfstücks noch nicht mit den anderen Teilen des Kopfstücks verbunden ist.

Die Erfindung wird im folgenden näher unter Bezugnahme auf die Zeichnung erläutert, die ein vorteilhaftes Ausführungsbeispiel veranschaulicht. Es zeigen:

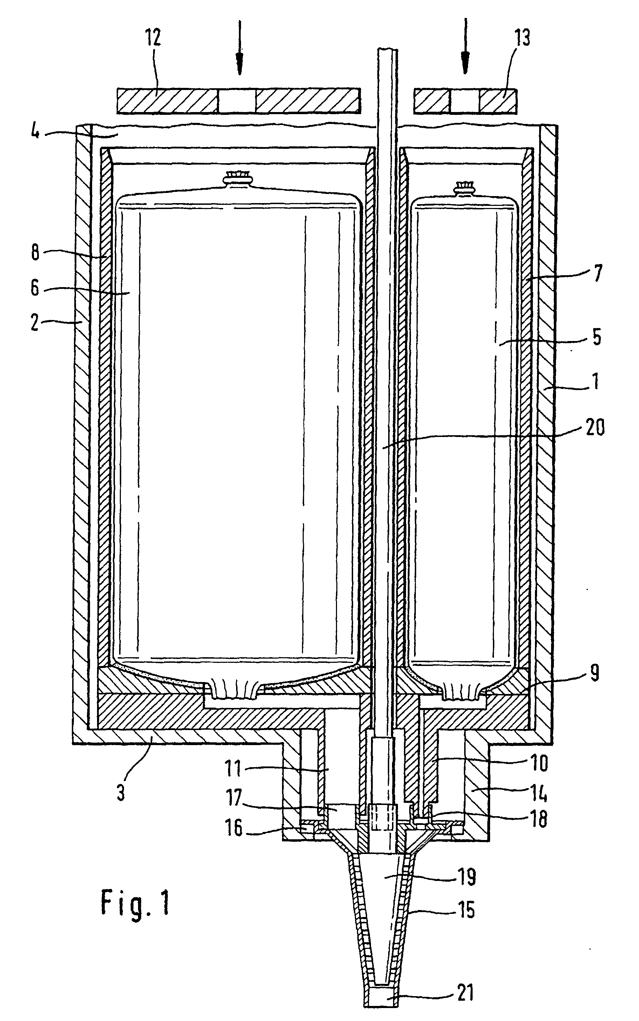

- Fig. 1: einen Längsschnitt durch die Anordnung,
- Fig. 2 u. 3: eine Seiten- und Stirnansicht der Zylinder,

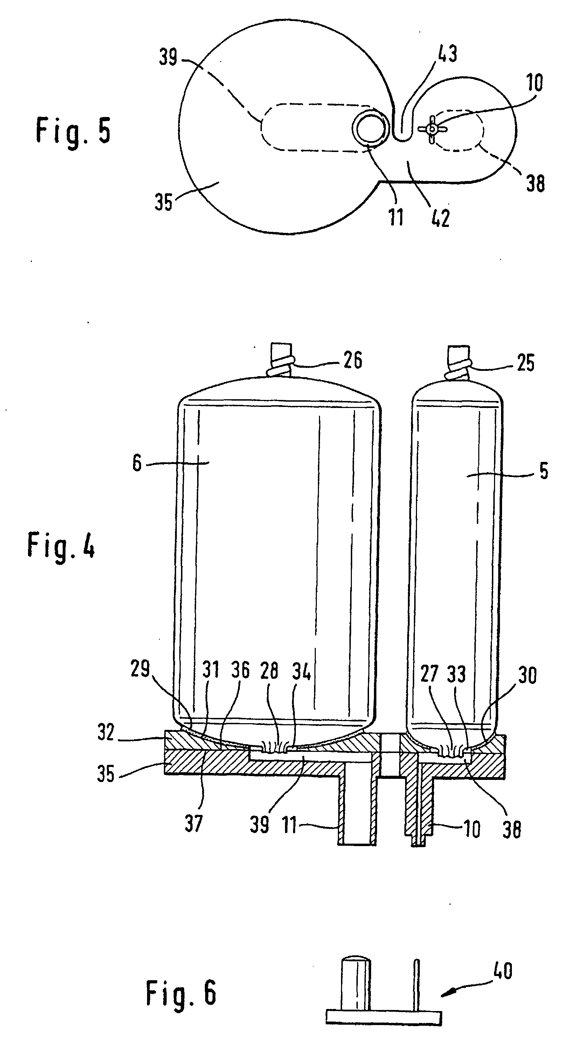

- Fig. 4 u. 5: eine Seiten- und Stirnansicht der mit dem Kopfstück verbundenen Schlauchbeutel und
- Fig. 6: einen Stopfen für die Anschlußstutzen des Kopfstücks.

Ein Ausbringgerät, dessen Gehäuse durch die Wände 1, 2, 3 angegeben ist, bildet einen Aufnahmeraum 4 für in Schlauchbeuteln 5, 6 enthaltene, fließfähige Komponenten. Die Schlauchbeutel 5, 6 sind durch Zylinder 7, 8 abgestützt. Ferner sind die Schlauchbeutel fest mit einem Kopfstück 9 verbunden, welches Anschlußstutzen 10, 11 bildet, durch die die mittels Kolben 12, 13 aus den Schlauchbeuteln 5, 6 ausgepreßten Komponenten austreten können. An der Stirnwand 3 des Ausbringgeräts ist eine Halterung 14 vorgesehen, in welcher die Anschlußstutzen 10, 11 gelegen sind und an der ein Mischer 15 beispielsweise mittels eines Bajonettverschlusses 16 derart befestigt werden kann, daß seine Anschlußstutzen 17, 18 dicht an die Anschlußstutzen 10, 11 angeschlossen sind. Der Mischer 15 kann ein statischer oder dynamischer Mischer bekannter Bauart sein. Wenn es sich um einen dynamischen Mischer handelt, ist seine Welle 19 mit einer Antriebswelle 20 des Ausbringgeräts gekuppelt. Die aus den Beuteln 5, 6 ausgepreßten Komponenten passieren gemeinsam den Mischer 15 und treten aus dessen Düse 21 in innig gemischtem Zustand aus. Es handelt sich dabei beispielsweise um zahnärztliche Abdruckmasse. Insoweit kann die Anordnung als bekannt betrachtet werden.

Die Schlauchbeutel 5, 6, die die zu mischenden Komponenten enthalten, sind ursprünglich an beiden Enden unter Bildung je eines Zopfes 25, 26 bzw. 27, 28 verschlossen. Die vordere Stirnseite jedes Beutels ist durch eine abdichtende Klebmasse 29 mit einer konkav angepaßten Fläche 30, 31 verklebt, die an dem hinteren Teil 32 des Kopfstückes 9 ausgebildet ist. Sie umgibt eine Öffnung 33, 34, durch die der Zopf 27, 28 hindurchragt oder mindestens zugänglich ist, solange dieser Teil 32 noch nicht mit dem anderen Teil 35 des Kopfstücks verbunden ist.

Die Teile 32, 35 des Kopfstücks 9 weisen Flächen 36, 37 auf, die dicht in solcher Weise miteinander verklebt sind, daß die Öffnungen 33, 34 vollständig von der Atmosphäre und voneinander abgeschlossen sind. Innerhalb jedes der beiden abgeschlossenen Bereiche der Fuge ist ein Kanal 38, 39 gebildet, der jeweils von einer Öffnung 33, 34 zu dem zugeordneten Anschlußstutzen 10 bzw. 11 führt. Im Lagerzustand sind diese Stutzen mittels eines Doppelverschlußstopfens 40 verschließbar. Nach dem Einsetzen in das Gerät wird der Stopfen 40 durch den Mischer 15 ersetzt.

Bei der Verbindung des Kopfstücks 9 mit den Beuteln 5, 6 verfährt man so, daß zunächst der Teil 32 des Kopfstücks mit den Beuteln verklebt und die Zöpfe 28, 29 geöffnet, beispielsweise abgeschnitten werden. Danach werden die beiden Teile 32, 35 des Kopfstücks 9 dicht miteinander verklebt oder verschweißt.

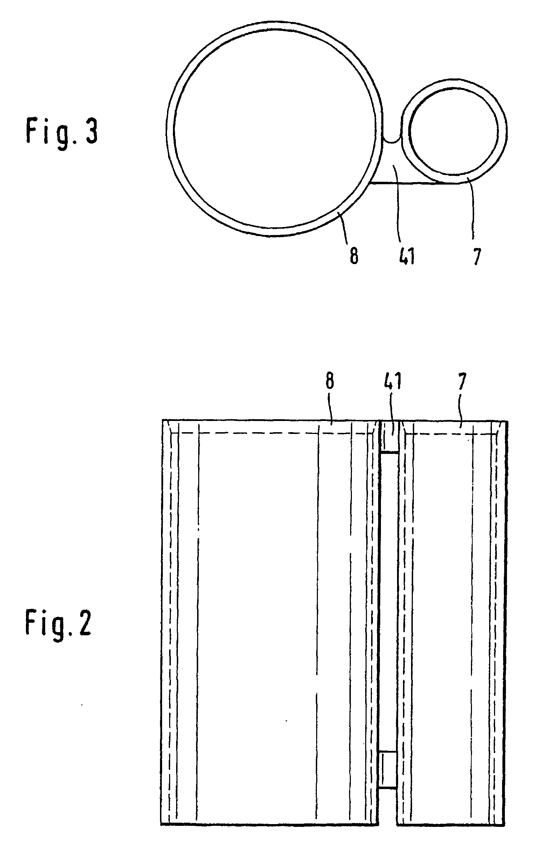

Die Zylinder 7, 8 können fest mit dem Kopfstück 9 verbunden sein. Zweckmäßiger und weniger aufwendig ist es im allgemeinen, sie gemäß Fig. 2 und 3 als separate Teile auswechselbar und wiederverwendbar vorzusehen. Um die Benutzung zu vereinfachen, können sie starr durch Brücken 41 miteinander verbunden sein. Ihr Umriß gleicht dem des Kopfstücks 9.

Der Mittelteil 42 des Kopfstücks 9 kann ebenso wie die Brükken 41 in der aus der Zeichnung ersichtlichen Weise ein wenig außermittig angeordnet sein, so daß der Bereich 43 in der Mitte zwischen den Stutzen 10, 11 zu der der Brücke 41, 42 gegenüberliegenden Seite hin offen ist. Dadurch wird es möglich, das aus den Beuteln 11, 12, den Zylindern 28, 29 sowie dem Kopfstück 9 bestehende Einsatzteil von einer Seite, im allgemeinen von der oberen Seite her, in das Ausbringgerät einzusetzen, wobei die Öffnung 43 eine gegebenenfalls vorhandene Mischerwelle 20 mittig in bezug auf die Stutzen 10, 11 aufnimmt.

Dank der Erfindung entfällt während des Gebrauchs jegliches Dichtungsproblem zwischen den Schlauchbeuteln und dem Kopfstück. Zusammengehörige Komponenten, die mit demselben Kopfstück verbunden sind, können auch nicht mehr verwechselt werden. Der Wechselvorgang gestaltet sich sehr einfach.

## Patentansprüche

1. Anordnung zum Ausgeben einer gemischten dentaltechnischen Mehrkomponentenmasse mit Schlauchbeuteln (5, 6), die die Komponenten der Masse enthalten, einem Gerät zum Auspressen der Komponenten, einem Kopfstück (9) mit Kanälen (38, 39) zum Führen der ausgepreßten Komponenten zu am Kopfstück (9) vorgesehenen Anschlüssen (10, 11) und einem daran anschließbaren Mischer (15), **dadurch gekennzeichnet, daß** das Kopfstück (9) einschließlich der Anschlüsse (10, 11) fest mit den Schlauchbeuteln (5, 6) verbunden und mit diesen auswechselbar ist.

2. Anordnung nach Anspruch 1, **dadurch gekennzeichnet, daß** das Kopfstück (9) mit der Öffnungsseite der Beutel (5, 6) dicht verklebt ist.

3. Anordnung nach Anspruch 1 oder 2, **dadurch gekennzeichnet, daß** ein einheitliches Kopfstück (9), das mehrere getrennte Kanäle (38, 39) enthält, mit mehreren Schlauchbeuteln (5, 6) verbunden ist.

4. Anordnung nach einem der Ansprüche 1 bis 3, **dadurch gekennzeichnet, daß** das Kopfstück (9) aus wenigstens zwei Teilen (32, 35) besteht, von denen einer (32) mit wenigstens einem Schlauchbeutel (5, 6) derart verbunden ist, daß dessen Verschlußende (28, 29) von der dem Beutel abgewandten Seite dieses Teils (32) her zugänglich ist, solange dieser noch nicht mit dem anderen Teil (35) verbunden ist.

## Claims

1. Arrangement for dispensing a mixed dental multicomponent composition, with tubular bags (5, 6) which contain the components of the composition, with a unit for pressing the components out, with a head piece (9) with channels (38, 39) for guiding the pressed-out components to attachments (10, 11) provided on the head piece (9), and with a mixer (15) which can be attached thereto, **characterized in that** the head piece (9) including the attachments (10, 11) is firmly connected to the tubular bags (5, 6) and can be exchanged along with these.

2. Arrangement according to Claim 1, **characterized in that** the head piece (9) is bonded sealingly to the opening side of the bags (5, 6).

3. Arrangement according to Claim 1 or 2, **characterized in that** a single head piece (9) containing a plurality of separate channels (38, 39) is connected to a plurality of tubular bags (5, 6).

4. Arrangement according to one of Claims 1 to 3, **characterized in that** the head piece (9) consists of at least two parts (32, 35), of which one (32) is connected to at least one tubular bag (5, 6) in such a way that the closure end (28, 29) of the latter is accessible from that side of this part (32) directed away from the bag as long as the part (32) has not yet been connected to the other part (35).

## Revendications

1. Dispositif de distribution d'une pâte dentaire mixte à plusieurs composants, comportant des sachets (5, 6) qui contiennent les composants de la pâte, un appareil pour exprimer les composants, une pièce de tête (9) avec des canaux (38, 39) pour guider les composants exprimés vers des raccords (10, 11) prévus sur la pièce de tête (9), ainsi qu'un mélangeur (15) qui peut être raccordé à ceux-ci, **caractérisé en ce que** la pièce de tête (9) avec les raccords (10, 11) est reliée fixement aux sachets (5, 6) et peut être échangée avec ceux-ci.

2. Dispositif selon la revendication 1, **caractérisé en ce que** la pièce de tête (9) est collée de manière étanche avec le côté d'ouverture des sachets (5, 6).

3. Dispositif selon la revendication 1 ou 2, **caractérisé en ce qu'**une seule pièce de tête (9), qui contient plusieurs canaux (38, 39) séparés, est reliée à plusieurs sachets (5, 6).

4. Dispositif selon l'une des revendications 1 à 3, **caractérisé en ce que** la pièce de tête (9) est constituée d'au moins deux parties (32, 35) dont une (32) est reliée à au moins un sachet (5, 6) de manière que son extrémité de fermeture (28, 29) soit accessible depuis le côté de cette partie (32), tourné à l'opposé du sachet, tant que cette partie n'est pas encore reliée à l'autre partie (35).
